(19) Europäisches Patentamt
European Patent Office
Office européen des brevets

(11) Publication number : 0 664 316 A1

(12) # EUROPEAN PATENT APPLICATION

(21) Application number : 95300257.3

(22) Date of filing : 17.01.95

(51) Int. Cl.[6] : C08K 5/06, C08K 5/37, C08K 5/54, C08K 5/15, C08L 69/00

(30) Priority : 19.01.94 JP 4109/94
15.03.94 JP 43975/94
23.05.94 JP 108255/94
27.07.94 JP 175437/94

(43) Date of publication of application :
26.07.95 Bulletin 95/30

(84) Designated Contracting States :
DE FR GB

(71) Applicant : TEIJIN LIMITED
6-7, Minamihonmachi 1-chome
Chuo-ku
Osaka-shi Osaka 541 (JP)

(72) Inventor : Kushida, Takashi, c/o Iwakuni Res. Center
Teijin Ltd.,
2-1, Hinodecho
Iwakuni-shi, Yamaguchi-ken (JP)
Inventor : Kido, Nobuaki, c/o Iwakuni Res. Center
Teijin Ltd.,
2-1, Hinodecho
Iwakuni-shi, Yamaguchi-ken (JP)
Inventor : Matsumura, Shunichi, c/o Iwakuni Res. Center
Teijin Ltd.,
2-1, Hinodecho
Iwakuni-shi, Yamaguchi-ken (JP)
Inventor : Kondo, Fumitake, c/o Iwakuni Res. Center
Teijin Ltd.,
2-1, Hinodecho
Iwakuni-shi, Yamaguchi-ken (JP)

(74) Representative : Votier, Sidney David et al
CARPMAELS & RANSFORD
43, Bloomsbury Square
London WC1A 2RA (GB)

(54) **Polycarbonate composition having improved resistance to gamma-ray radiation.**

(57) A polycarbonate composition having improved resistance to γ-ray radiation, containing 0.01 to 10 parts by weight of a benzyl ether or benzylthioether derivative or the like. This polycarbonate resin composition is almost free from yellowing by γ-ray radiation in air or $O_2$-free atmosphere, and is suitable for use in medical molded articles which are sterilized by γ-ray radiation.

EP 0 664 316 A1

Jouve, 18, rue Saint-Denis, 75001 PARIS

Detailed Description of the Invention

The invention relates to a polycarbonate composition having improved resistance to γ-ray radiation, and, more specifically, to a polycarbonate composition which can prevent deterioration in physical properties and yellowing caused by γ-ray radiation.

JP-A-63-213553 (the term "JP-A" as used herein means an "unexamined published Japanese patent application) discloses a composition comprising an aromatic polycarbonate resin and at least one effective epoxy compound in an amount effective for the prevention of yellowing which occurs when it is exposed to radiation for sterilization. This epoxy compound is structurally characterized in that it has at least one quaternary carbon atom in its oxirane ring.

U.S. Patent No.4,804,692 discloses a thermoplastic polycarbonate molding composition containing about 0.05 to about 10 % by weight of a stabilizing agent selected from the group consisting of

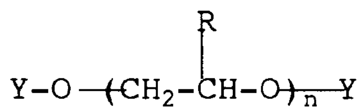

and

$$Y\text{-}O\{(CH_2)_m\text{-}O\}_n\, Y$$

wherein R is a hydrogen atom, a halogen atom, or a $C_1$-$C_{10}$ alkyl, $C_6$-$C_{10}$ aryl, $C_1$-$C_{22}$ acyl, $C_6$-$C_{18}$ alkylaryl, or a $C_4$-$C_{10}$ cycloalkyl radical, m is 1 or 3 to 6, n is an integer of about 20 to 70, and Y is a radical conforming to

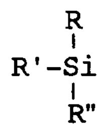

wherein R, R' and R" are independently one of the others are selected from $C_1$-$C_{10}$ alkyl and $C_6$-$C_{12}$ aryl radicals.

JP-A-2-38450 discloses a polycarbonate resin composition which can withstand γ-ray radiation and comprises an aromatic polycarbonate resin and a stabilizer represented by the following formula:

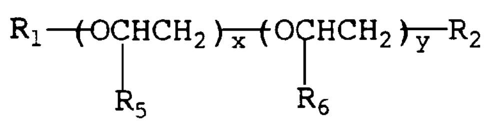

wherein $R^1$ and $R^2$ are independently from each other

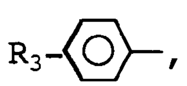 , 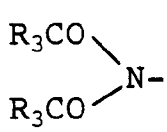 , and 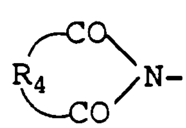

$R^3$ is hydrogen atom, a $C_{1-20}$ alkyl or $C_{1-20}$ cycloalkyl, $R^5$ and $R^6$ are independently hydrogen atom or a $C_{1-3}$ alkyl, x is an integer of about 1 to 70, y is an integer of about 0 to 70, and $R^4$ is a $C_{2-6}$ alkyl or cycloalkyl, a $C_{6-10}$ aryl or a $C_{7-20}$ alkylaryl or cycloalkylaryl.

JP-A-2-55062 and JP-A-2-68068 disclose medical molded articles made from a polycarbonate sterilizable with irradiation, which comprises a polymer or oligomer of an aromatic polycarbonate containing a structural unit derived from a halogenated bisphenol in its molecular chain.

JP-A-5-132552 discloses a product which is sterilized by ionizing radiation and molded from a thermoplastic molding composition containing an aromatic polycarbonate resin end-capped with a compound represented by the following formula:

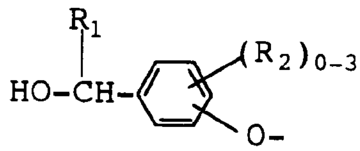

wherein $R^1$ is hydrogen atom or a hydrocarbyl group, and $R^2$ is a hydrocarbyl group or a hydrocarbyloxy group,

U.S. Patent No.5,274,009 proposes a thermoplastic molding composition containing a polycarbonate resin and

(i) 0.1 to 10 % of a polyalkylene oxide of the formula (I):

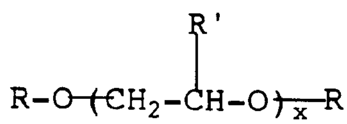

...(I)

wherein R represents hydrogen atom, $C_{1-6}$ alkyl, tetrahydropyranyl or a silyl radical, R' represents hydrogen atom, or a $C_{1-6}$ alkyl and x is an integer of 1 to 100, and

(ii) 0.1 to 10 % of an aromatic compound which contains at least one sulfonic acid ester substituent. The composition which is resistant to the effects of γ-ray radiation is suitable for the preparation of sterilizable medical instruments.

An object of the invention is to provide a polycarbonate composition having improved resistance to γ-ray radiation.

Another object of the invention is to provide a polycarbonate composition which undergoes no or almost no yellowing caused by γ-ray radiation in air or an $O_2$-free atmosphere, causes little problems in deterioration in physical properties, and at the time of disposal.

Still another object of the invention is to provide a polycarbonate composition which is useful as a material for use in medical materials which are sterilized by γ-ray radiation.

Other objects and advantages of the invention will become more apparent from the following description.

According to the invention, the above-described objects and advantages of the present invention can be attained by a polycarbonate composition having improved resistance to γ-ray radiation, which comprises:

(A) 100 parts by weight of a polycarbonate having, at its terminal(s), substantially no carbon-to-carbon unsaturated bond which can be cleaved by γ-ray radiation; and

(B) 0.01 to 10 parts by weight of a compound represented by the following formula (1):

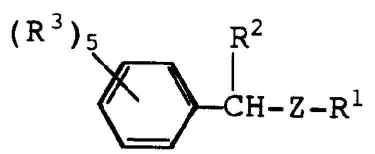

...(1)

wherein $R^1$ is selected from the group consisting of hydrogen atom, a hydrocarbon group having 1 to 12 carbon atoms, a $C_{1-12}$ hydrocarbon-O-$C_{2-12}$ hydrocarbon group, a hydrocarbon group having 2 to 12 carbon atoms and at least one hydroxyl group, a poly(oxy $C_{2-4}$ alkylene) group, a tri($C_{1-6}$ hydrocarbon)silyl group and a glycidyl group, $R^2$ is selected from the group consisting of hydrogen atom and a hydrocarbon group having 1 to 12 carbon atoms, $R^3$ is selected from the group consisting of hydrogen atom, a halogen atom, a hydrocarbon group having 1 to 12 carbon atoms, a ($C_{1-12}$ hydrocarbon)oxymethyl group, a ($C_{1-12}$ hydrocarbon)oxy group, a ($C_{1-12}$ alkoxy)carbonyl group, a nitro group, a cyano group and an acyl group having 2 to 12 carbon atoms, five $R^3$'s may be the same or different, and Z is oxygen or sulfur atom.

The polycarbonate which is an object of the present invention has substantially no carbon-to-carbon unsaturated bond which can be cleaved by γ-ray radiation, at its terminal(s). If polycarbonate having, at its terminal(s), a carbon-to-carbon unsaturated bond which can be cleaved by γ-ray radiation is used, there will be such an inconvenience as formation of a crosslinked structure by the cleavage of the carbon-to-carbon unsaturated bond at the time of sterilization by γ-ray radiation.

The polycarbonate used in the present invention, for example, consists essentially of a recurring unit represented by the following formula (2):

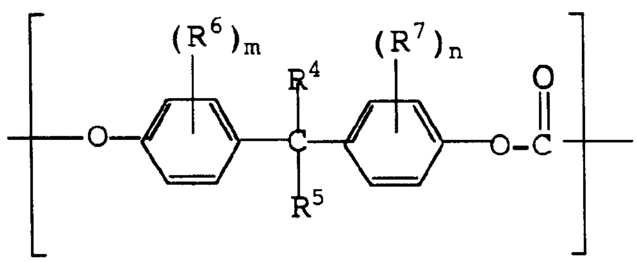

...(2)

wherein $R^4$ and $R^5$ are independently selected from hydrogen atom, an alkyl group having 1 to 5 carbon atoms and a cycloalkyl group having 5 to 6 carbon atoms, $R^4$ and $R^5$ may be bonded to each other to form, together with a carbon atom to which $R^4$ and $R^5$ are bonded, a 5- or 6-membered ring, $R^6$ and $R^7$ are independently selected from a halogen atom, an alkyl group having 1 to 5 carbon atoms and a phenyl group, and m and n are independently 0, 1 or 2.

The polycarbonate has, for example, an end group represented by the following formula (3):

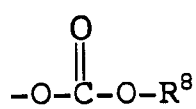

...(3)

wherein $R^8$ is a phenyl group, a $C_{1-12}$ alkyl-substituted phenyl group or a group represented by the following formula (4):

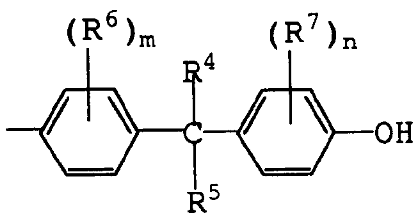

...(4)

wherein $R^4$, $R^5$, $R^6$, $R^7$, m and n are the same as defined in the above formula (2).

In the formula (2), $R^4$ and $R^3$ are independently selected from hydrogen atom, an alkyl group having 1 to 5 carbon atoms, and a cycloalkyl group having 5 to 6 carbon atoms.

The alkyl group having 1 to 5 carbon atoms may be of straight chain or branched chain, with illustrative examples thereof including methyl, ethyl, n-propyl, isopropyl, n-butyl, iso-butyl, sec-butyl, tert-butyl and n-pentyl.

Illustrative examples of the cycloalkyl group having 5 to 6 carbon atoms include cyclopentyl and cyclohexyl.

$R^4$ and $R^5$ may be bonded to each other to form a 5-or 6-membered ring together with a carbon atom to which $R^4$ and $R^5$ bond, with illustrative examples thereof including cyclopentylidene and cyclohexylidene.

In the above formula (2), $R^6$ and $R^7$ are independently selected from a halogen atom, an alkyl group having 1 to 5 carbon atoms and a phenyl group.

Preferred examples of the halogen atom include chlorine atom and bromine atom.

Illustrative examples of the alkyl group having 1 to 5 carbon atoms are the same as listed above for $R^4$ and $R^5$.

m and n are independently 0, 1 or 2.

In the above formula (3), $R^8$ is a phenyl group, a $C_{1-12}$ alkyl-substituted phenyl group, or a group represented by the above formula (4).

Specific examples of the $C_{1-12}$ alkyl-substituted phenyl group include tolyl, ethylphenyl, n-propylphenyl, iso-propylphenyl, n-butylphenyl, tert-butylphenyl n-octylphenyl, n-decylphenyl or n-laurylphenyl.

In the above formula (4), the definitions of $R^4$, $R^5$, $R^6$, $R^7$, m and n are the same as in the above formula

(2) and, accordingly, examples of these are the same as listed for the above formula (2).

The above-described polycarbonate consists essentially of one or a combination of two or more of the recurring unit represented by the above formula (2). Recurring units other than the recurring unit represented by the above formula (2) may be contained in an amount of at most 10 mol% of the total of all recurring units.

The polycarbonate used in the present invention may be composed of a single compound or a blend of two or more compounds.

The viscosity-average molecular weight of the polycarbonate ranges preferably from 15,000 to 35,000, more preferably from 20,000 to 30,000.

The polycarbonate used in the present invention may be produced by either a conventional interfacial polycondensation method or an ester interchange method.

In the interfacial polycondensation method, the recurring unit represented by the above formula (2) is formed by reacting bisphenol represented by the following formula (2)-1:

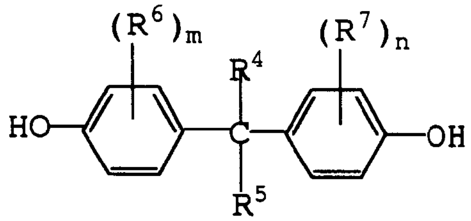

...(2)-1

wherein $R^4$, $R^5$, $R^6$, $R^7$, m and n are the same as defined in the above formula (2), with phosgene in the presence of an acid trapping agent.

In the ester interchange method, the recurring unit is formed by thermally fusing the bisphenol represented by the above formula (2)-1 and diaryl carbonate such as diphenyl carbonate to allow to react each other in the presence of an ester interchange catalyst.

Illustrative examples of the bisphenol represented by the above formula (2)-1 include bis(p-hydroxyphenyl)methane, 2,2-bis(p-hydroxyphenyl)propane, 9,9-bis-(p-hydroxyphenyl)fluorene, 2,2-bis-(4-hydroxyphenyl)butane, 1,1-bis-(4-hydroxyphenyl)cyclohexane, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane,2,2-bis-(3,5-dimethyl-4-hydroxyphenyl)-propane and 1,1-bis-(3,5-dimethyl-4-hydroxyphenyl)-cyclohexane. The most preferred is 2,2-bis-(4-hydroxyphenyl)propane(bisphenol-A).

As for the terminal group represented by the above formula (3), $R^8$ is easily produced as a phenyl group or a terminal group represented by the above formula (4) when the polycarbonate is produced by the ester interchange method, whereas $R^8$ is easily produced as a phenyl group or $C_{1-12}$ alkyl-substituted phenyl group such as m- and p-methylphenyl, m- and p-(iso- or n-)propylphenyl and m- and p-(tert- or n-)butylphenyl when the polycarbonate is produced by the interfacial polycondensation method. The $C_{1-12}$ alkyl-substituted phenyl group can be produced by causing the corresponding $C_{1-12}$ alkyl-substituted phenol to be present in the polycondensation system.

The stabilizer used in the present invention is represented by the following formula (1):

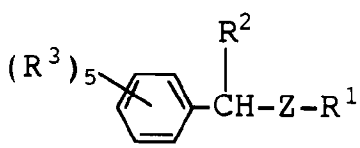

...(1)

wherein $R^1$ is selected from the group consisting of hydrogen atom, a hydrocarbon group having 1 to 12 carbon atoms, a $C_{1-12}$ hydrocarbon-O-$C_{2-12}$ hydrocarbon group, a hydrocarbon group having 2 to 12 carbon atoms and at least one hydroxyl group, a poly(oxy $C_{2-4}$ alkylene) group, a tri($C_{1-6}$ hydrocarbon)silyl group, and a glycidyl group, $R^2$ is selected from the group consisting of hydrogen atom and a hydrocarbon group having 1 to 12 carbon atoms, $R^3$ is selected from the group consisting of hydrogen atom, a halogen atom, a hydrocarbon group having 1 to 12 carbon atoms, a ($C_{1-12}$ hydrocarbon)oxymethyl group, a ($C_{1-12}$ hydrocarbon)oxy group, a ($C_{1-12}$ alkoxy)carbonyl group, a nitro group, a cyano group and an acyl group having 2 to 12 carbon atoms, five $R^3$'s may be the same or different, and Z is oxygen or sulfur atom.

As is apparent from the structure represented by the above formula (1), a stabilizer usable in the present

invention are common in that they have a benzyloxy or benzylthio skeleton.

In the above formula (1), illustrative examples of the hydrocarbon group having 1 to 12 carbon atoms for $R^1$ include an alkyl group having 1 to 12 carbon atoms, a cycloalkyl group having 5 to 12 carbon atoms, an aryl group having 6 to 12 carbon atoms, an alkylaryl group having 7 to 12 carbon atoms, and an aralkyl group having 7 to 12 carbon atoms.

The alkyl group having 1 to 12 carbon atoms may be of a straight or branched chain, with illustrative examples thereof including methyl, ethyl, propyl, isopropyl, butyl, isobutyl, tertiary butyl, secondary butyl, pentyl, 1-methylbut-1-yl, 1,1-dimethylprop-1-yl, hexyl, heptyl, octyl, nonyl, decyl, undecyl and dodecyl.

Specific examples of the cycloalkyl group having 5 to 12 carbon atoms include cyclopentyl, cyclohexyl, decahydronaphthyl, and 4-cyclohexylcyclohexyl.

Specific examples of the aryl group having 6 to 12 carbon atoms include phenyl, naphthyl and biphenyl.

Specific examples of the alkylaryl group having 7 to 12 carbon atoms includes tolyl, ethylphenyl, isopropylphenyl, methylnaphthyl and ethylnaphthyl.

Illustrative examples of the aralkyl group having 7 to 12 carbon atoms include benzyl and phenethyl.

The aryl group having 6 to 12 carbon atoms, the alkylaryl group having 7 to 12 carbon atoms, and the aralkyl group having 7 to 12 carbon atoms as described above may be substituted with a halogen atom, an alkoxy group having 1 to 6 carbon atoms, an alkoxycarbonyl group having 2 to 7 carbon atoms, a cyano group or the like, as required.

Illustrative examples of the $C_{1-12}$ hydrocarbon-O-$C_{2-12}$ hydrocarbon group for $R^1$ include a $C_{1-12}$ alkyl-O-$C_{2-12}$ alkyl group, a $C_{1-12}$ alkyl-O-$C_{6-12}$ aryl group, a $C_{7-12}$ aralkyl-O-$C_{2-12}$ alkyl group, and a $C_{7-12}$ aralkyl-O-$C_{6-12}$ aryl group.

Two alkyl moieties in the $C_{1-12}$ alkyl-O-$C_{2-12}$ alkyl group may be of a straight or branched chain. Illustrative examples of the alkyl group having 1 to 12 carbon atoms are the same as listed above. Also, examples of alkyl group having 2 to 12 carbon atoms are the same as listed above except methyl group. Examples of the $C_{1-12}$ alkyl-O-$C_{2-12}$ alkyl group are apparent from the examples of the alkyl group listed above.

Illustrative examples of the alkyl group having 1 to 12 carbon atoms in the $C_{1-12}$ alkyl-O-$C_{6-12}$ aryl group are the same as listed above. Illustrative examples of the aryl group having 6 to 12 carbon atoms are also the same as listed above. It is understood from the examples of those groups listed above that specific examples of the $C_{1-12}$ alkyl-O-$C_{6-12}$ aryl group include methoxyphenyl group, ethoxyphenyl group and the like.

Illustrative examples of the aralkyl group having 7 to 12 carbon atoms and the alkyl group having 2 to 12 carbon atoms in the $C_{7-12}$ aralkyl-O-$C_{2-12}$ alkyl group are the same as listed above. The alkyl group having 2 to 12 carbon atoms may be substituted by a hydroxyl group, as required. Therefore, it is understood from the examples of those groups listed above that specific examples of the $C_{7-12}$ aralkyl-O-$C_{2-12}$ alkyl group include benzyloxypropyl group, 3-benzyloxy-2-hydroxypropyl group and the like.

Illustrative examples of the aralkyl group having 7 to 12 carbon atoms and the aryl group having 6 to 12 carbon atoms in the $C_{7-12}$ aralkyl-O-$C_{6-12}$ aryl group are the same as listed above. Therefore, it is understood from the above-described examples that specific examples of the $C_{7-12}$ aralkyl-O-$C_{6-12}$ aryl group include benzyloxyphenyl group and the like.

Specific examples of the hydrocarbon group having 2 to 12 carbon atoms and at least one hydroxyl group for $R^1$ include alkyl group having 2 to 12 carbon atoms and at least one hydroxyl group. When a plurality of hydroxyl groups are present, it is preferred that they are present on the different carbon atoms of the alkyl group. Illustrative examples of the alkyl group having 2 to 12 carbon atoms in the alkyl group having 2 to 12 carbon atoms and at least one hydroxyl group are the same as listed above. Therefore, it is understood that specific examples of the alkyl group having 2 to 12 carbon atoms and at least one hydroxyl group include hydroxyethyl group, hydroxypropyl group, hydroxybutyl group and the like.

Illustrative examples of the poly(oxy $C_{2-4}$ alkylene) group for $R^1$ include group represented by the following formula (5):

$$-\!\left(Y\text{-}O\right)_p\!- R^9 \qquad (5)$$

wherein Y is an alkylene group having 2 to 4 carbon atoms, $R^9$ is selected from the group consisting of hydrogen atom, an alkyl group having 1 to 16 carbon atoms, an aryl group having 6 to 12 carbon atoms, an alkylaryl group having 6 to 16 carbon atoms, and an aralkyl group having 7 to 16 carbon atoms, and p is an integer of 2 to 100.

Illustrative examples of the alkylene group having 2 to 4 carbon atoms as Y in the formula (5) include ethylene, trimethylene, propylene and tetramethylene.

The alkyl group having 1 to 16 carbon atoms for $R^9$ may be of a straight or branched chain, with illustrative examples thereof including tridecyl group, tetradecyl group, pentadecyl group and hexadecyl group in addition

to the examples of the alkyl group having 1 to 12 carbon atoms listed above. Specific examples of the aryl group having 6 to 12 carbon atoms are the same as listed above. Illustrative examples of the alkylaryl group having 6 to 16 carbon atoms include octylphenyl group and decylphenyl group in addition to the examples of the alkylaryl group having 6 to 12 carbon atoms listed above. Illustrative examples of the aralkyl group having 7 to 16 carbon atoms include phenyloctyl group and phenyldecyl group in addition to the examples of the aralkyl group having 7 to 12 carbon atoms listed above. The aryl group having 6 to 12 carbon atoms, the aryl moiety of the alkylaryl group having 6 to 16 carbon atoms, and the aryl moiety of the aralkyl group having 7 to 16 carbon atoms may be substituted with a halogen atom, alkoxy group having 1 to 6 carbon atoms, alkoxycarbonyl group having 2 to 7 carbon atoms, cyano group or the like.

The p is an integer of 2 to 100, preferably 2 to 40, more preferably 2 to 20, the most preferably 2 to 10.

Specific examples of the group represented by the above formula (5) include

$-(CH_2CH_2O)_p-H$, $-(CH_2CH_2O)_p-C_2H_5$,

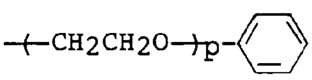 , 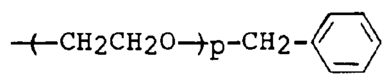 ,

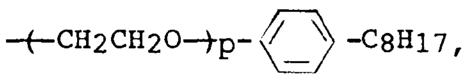

$-(CH_2CH_2CH_2O)_p-H$,
$-(CH_2CH_2CH_2O)_p-C_2H_5$,

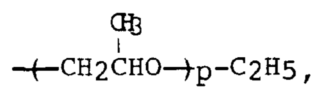

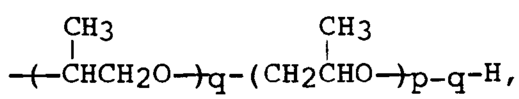

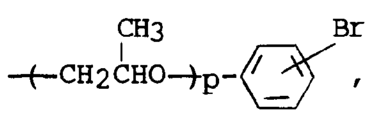 , 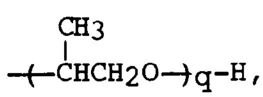

$-(CH_2CH_2CH_2CH_2O)_p-H$, $-(CH_2CH_2CH_2CH_2O)_p-C_2H_5$,

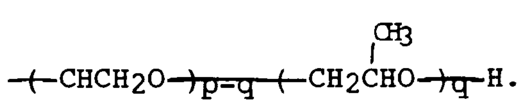

It should be understood from the last specific example that the group of the formula (5) include also a group containing two or more oxyalkylene groups.

Illustrative examples of the tri($C_{1-6}$ hydrocarbon)silyl group for $R^1$ include tri($C_{1-6}$ alkyl)silyl group, triphenylsilyl group, di($C_{1-6}$ alkyl)phenylsilyl group, and ($C_{1-6}$ alkyl)diphenylsilyl group.

Illustrative examples of the tri($C_{1-6}$ alkyl)silyl group includes trimethylsilyl group, triethylsilyl group, tripropylsilyl group, t-butyldimethylsilyl group, and dimethylmonohexylsilyl group. Examples of the di($C_{1-6}$ alkyl)phenylsilyl group includes dimethylmonophenylsilyl group, diethylmonophenylsilyl group, and dibutylmonophenylsilyl group. Examples of the ($C_{1-6}$ alkyl)diphenylsilyl group include monomethyldiphenylsilyl group, monoethyldiphenylsilyl group and monohexyldiphenylsilyl group.

In the above formula (1), $R^2$ is hydrogen atom or a hydrocarbon group having 1 to 12 carbon atoms.

Illustrative examples of the hydrocarbon group having 1 to 12 carbon atoms include an alkyl group having 1 to 12 carbon atoms, a cycloalkyl group having 5 to 12 carbon atoms, and a phenyl group. Illustrative examples

of the alkyl group having 1 to 12 carbon atoms and the cycloalkyl group having 5 to 12 carbon atoms are the same as listed above.

In the above formula (1), $R^3$ is selected from the group consisting of hydrogen atom, a halogen atom, a hydrocarbon group having 1 to 12 carbon atoms, a ($C_{1-12}$ hydrocarbon)oxymethyl group, a ($C_{1-12}$ hydrocarbon)oxy group, a ($C_{1-12}$ alkoxy)carbonyl group, a nitro group, a cyano group and an acyl group having 2 to 12 carbon atoms. Five $R^3$'s may be the same or different.

Preferred examples of the halogen atom include chlorine atom and bromine atom.

Illustrative examples of the hydrocarbon group having 1 to 12 carbon atoms include an alkyl group having 1 to 12 carbon atoms and a phenyl group. Specific examples of the alkyl group having 1 to 12 carbon atoms are the same as listed above.

Specific examples of the ($C_{1-12}$ hydrocarbon)oxymethyl group include ($C_{1-12}$ alkyl)oxymethyl group and ($C_{7-12}$ aralkyl)oxymethyl group. Illustrative examples of the alkyl moiety having 1 to 12 carbon atoms and the aralkyl moiety having 7 to 12 carbon atoms of these respective groups are the same as listed above for the alkyl group having 1 to 12 carbon atoms and aralkyl group having 7 to 12 carbon atoms.

Illustrative examples of the ($C_{1-12}$ hydrocarbon)oxy group include an alkyloxy group having 1 to 12 carbon atoms, a phenoxy group, and a benzyloxy group. Illustrative examples of the alkyl moiety of the alkyloxy group having 1 to 12 carbon atoms are the same as listed above for the alkyl group having 1 to 12 carbon atoms.

Specific examples of the alkoxy moiety having 1 to 12 carbon atoms of the ($C_{1-12}$ alkoxy)carbonyl group is the same as listed above. Illustrative examples of the ($C_{1-12}$ alkoxy)carbonyl group include methoxycarbonyl, ethoxycarbonyl, butoxycarbonyl, hexyloxycarbonyl, decyloxycarbonyl and dodecyloxycarbonyl.

The acyl group having 2 to 12 carbon atoms may be of a straight or branched chain, with illustrative examples thereof including acetyl, propionyl, butyryl, valeryl, caproyl, caprylyl, capryl and undecyl.

In the above formula (1), Z is oxygen atom or sulfur atom.

Among compounds represented by the above formula (1), the preferred are those conveniently represented by the following formulae (1)-1, (1)-2, (1)-3, (1)-4, (1)-5, (1)-6 and (1)-7:

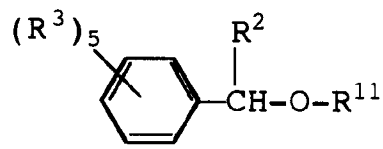

...(1)-1

wherein $R^{11}$ is a hydrocarbon group having 2 to 12 carbon atoms and at least one hydroxyl group, $R^2$ and $R^3$ are the same as defined in the above formula (1),

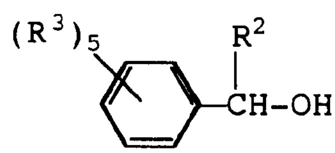

...(1)-2

wherein $R^2$ and $R^3$ are the same as defined in the above formula (1),

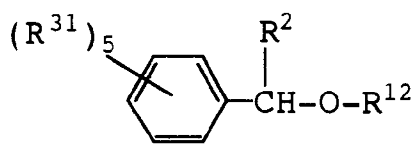

...(1)-3

wherein $R^{31}$ is hydrogen atom or ($C_{1-12}$ hydrocarbon)oxymethyl group, $R^{12}$ is a hydrocarbon group having 1 to 12 carbon atoms or a $C_{1-12}$ hydrocarbon-O-$C_{2-12}$ hydrocarbon group, and $R^2$ is the same as defined in the above formula (1),

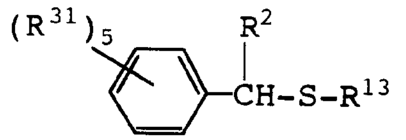

...(1)-4

wherein $R^{13}$ is an aralkyl group having 7 to 12 carbon atoms, and $R^{31}$ and $R^2$ are the same as defined in the above formula (1)-3,

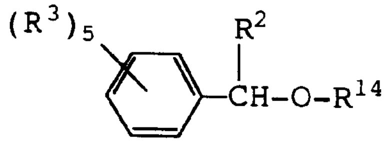

...(1)-5

wherein $R^{14}$ is a poly(oxy $C_{2-4}$ alkylene) group, and $R^2$ and $R^3$ are the same as defined in the above formula (1),

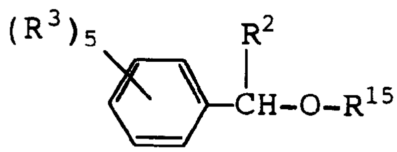

...(1)-6

wherein $R^{15}$ is a tri($C_{1-6}$ hydrocarbon)silyl group, and $R^2$ and $R^3$ are the same as defined in the above formula (1),

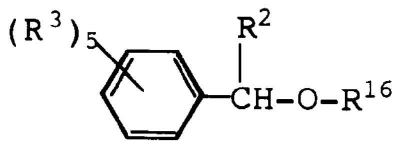

...(1)-7

wherein $R^{16}$ is a glycidyl group, and $R^2$ and $R^3$ are the same as defined in the above formula (1).

The definitions and specific examples of $R^{11}$ in the above formula (1)-1, $R^{31}$ and $R^{12}$ in the above formula (1)-3, $R^{31}$ and $R^{13}$ in the above formula (1)-4, $R^{14}$ in the above formula (1)-5, $R^{15}$ in the above formula (1)-6, and $R^{16}$ in the above formula (1)-7 are apparent from those listed above.

Specific examples of the compound represented by the above formula (1)-1 include 4-benzyloxy-1-butanol, 3-benzyloxy-1-propanol, 3-benzyloxy-2-propanol, 4-(α-methylbenzyloxy)-1-butanol, 4-(p-methylbenzyloxy)-1-butanol, 4-(p-methoxybenzyloxy)-butanol, 4-(p-butoxymethylbenzyloxy)-1-butanol, 5-(p-phenoxybenzyloxy)-1-pentanol, 5-(p-phenylbenzyloxy)-1-pentanol, 4-(p-bromobenzyloxy)-1-butanol, 3-(p-chlorobenzyloxy)-1-propanol, 6-(p-methoxycarbonylbenzyloxy)-1-hexanol, 4-(cyclohexanecarbonylbenzyloxy)-1-butanol, 4-(p-nitrobenzyloxy)-1-butanol, 4-(p-cyanobenzyloxy)-1-butanol and the like.

Illustrative examples of the compound represented by the above formula (1)-2 include benzyl alcohol, p-methylbenzyl alcohol, p-methoxybenzyl alcohol, p-bromobenzyl alcohol, p-phenylbenzyl alcohol, p-phenoxybenzyl alcohol, p-benzyloxybenzyl alcohol, o-benzyloxybenzyl alcohol, α-methylbenzyl alcohol, α-ethylbenzyl alcohol, α-butylbenzyl alcohol, p-methoxycarbonylbenzyl alcohol, p-ethoxycarbonylbenzyl alcohol, p-propoxycarbonylbenzyl alcohol, p-hexyloxycarbonylbenzyl alcohol, p-butyloxymethylbenzyl alcohol, p-hexyloxymethylbenzyl alcohol, p-chlorobenzyl alcohol, p-nitrobenzyl alcohol, m-phenoxybenzyl alcohol, p-cyanobenzyl alcohol and p-ethylcarbonylbenzyl alcohol.

Illustrative examples of the compound represented by the above formula (1)-3 include benzylpropyl ether, ethoxyethylbenzyl ether, benzylbutyl ether, benzylheptyl ether, benzylhexyl ether, benzyl-iso-butyl ether, benzyliso-pentyl ether, benzyl-sec-butyl ether, benzyl-tert-butyl ether, benzylcyclohexyl ether, benzylphenyl ether, benzyl-o-tolyl ether, benzyl-m-tolyl ether, benzyl-p-tolyl ether, benzyl-2-naphthyl ether, α,α'-diphenoxy xylylene, dibenzyl ether, p-(α,α'-dibenzyloxy)xylylene, 1,3-dibenzyloxy-2-propanol, (p-methoxybenzyl)benzyl ether, (p-methybenzyl)benzyl ether, (o-methylbenzyl)benzyl ether, (m-methybenzyl)benzyl ether, (α-methy-

benzyl)benzyl ether, (α-ethylbenzyl)benzyl ether, p-(α,α'-di(1-phenylethoxy))xylylene, m-(α,α'-dibenzyloxy)xylylene and the like.

In the above formula (1), examples of the compound in which $R^1$ is equivalent to $R^{12}$ in the formula (1)-3 include (p-methylbenzyl)phenyl ether, (o-methylbenzyl)phenyl ether, (p-methoxybenzyl)phenyl ether, (p-methoxycarbonylbenzyl)phenyl ether, (p-nitrobenzyl)phenyl ether, (p-methoxycarbonylbenzyl)benzyl ether, (p-butoxycarbonylbenzyl)benzyl ether, di(p-bromobenzyl)ether, di(p-chlorobenzyl)ether, di(p-nitrobenzyl)ether, di(p-cyanobenzyl)ether, di(p-methoxycarbonylbenzyl)ether, di(p-methylcarbonylbenzyl)ether and p-(α,α'-di(1-(p-bromophenyl)ethoxy))xylylene.

Illustrative examples of the compound represented by the above formula (1)-4 include dibenzyl thioether, (α-methybenzyl)benzyl thioether and the like. In the above formula (1), examples of the compound in which $R^1$ is equivalent to $R^{13}$ in the formula (1)-4 include di(p-methybenzyl)thioether and (p-methoxybenzyl)benzyl thioether.

Illustrative examples of the compound represented by the above formula (1)-5 include (ethoxyethoxyethyl)benzyl ether, one-terminal benzyloxy-capped polypropylene glycol,

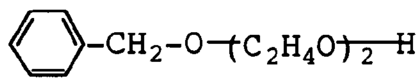 ,

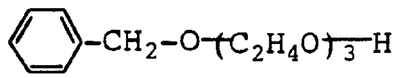

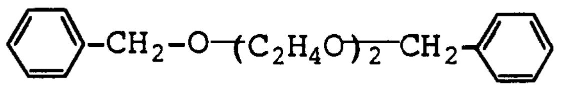 ,

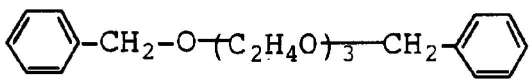 ,

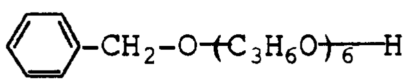 ,

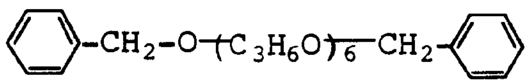

Illustrative examples of the compound represented by the above formula (1)-6 include benzyl(trimethylsilyl)ether, benzyl(ethyldimethyl)silyl ether, benzyl(triisopropylsilyl)ether, benzyl(tert-butyldimethylsilyl)ether, α-methylbenzyl(trimethylsilyl)ether, p-methylbenzyl(trimethylsilyl)ether, p-methoxybenzyl(trimethylsilyl)ether, p-bromobenzyl(trimethysilyl)ether, p-cyanobenzyl(trimethylsilyl)ether, p-nitrobenzyl(trimethylsilyl)ether, p-butoxymethylbenzyl(trimethylsilyl)ether, p-methoxycarbonylbenzyl(trimethylsilyl)ether and the like.

Illustrative examples of the compound represented by the above formula (1)-7 include benzylglycidyl ether, (p-methylbenzyl)glycidyl ether, (α-methylbenzyl)glycidyl ether, (p-methoxybenzyl)glycidyl ether, (p-methoxycarbonylbenzyl)glycidyl ether, (p-bromobenzyl)glycidyl ether, (p-cyanobenzyl)glycidyl ether, (p-nitrobenzyl)glycidyl ether and the like.

The compounds represented by the above formula (1) may be used alone or in a combination of two or more.

The compound represented by the above formula (1) is used in a proportion of 0.01 to 10 parts by weight based on 100 parts by weight of the polycarbonate. When the amount of the above compound is below 0.01 part by weight, there will be produced only a composition which has a small effect of suppressing yellowing caused by γ-ray radiation, whereas when it exceeds 10 parts by weight, there will be produced a composition with markedly declined physical properties, both of which are inadvantageous.

The compound represented by the above formula (1) is preferably contained in a proportion of 0.05 to 5 parts by weight, more preferably 0.1 to 3 parts by weight.

To produce the polycarbonate resin composition of the present invention, it is preferred to mix the compound represented by the above formula (1) into the molten polycarbonate. As a method used in this case, known mixing methods may be used. For instance, it is preferable to knead the polycarbonate and the compound represented by the above formula (1) simultaneously, using a melt kneader such as a biaxial extruder. The mixing temperature at this time ranges preferably from 250 to 320°C. When this temperature is below 250°C, the polymer is not be fully molten, resulting in insufficient mixing, whereas, when it is above 320°C, thermal deterioration of the compound and polymer is liable to occur. The mixing temperature ranges more preferably from 260 to 300°C.

Alternatively, the intended polycarbonate resin composition can be obtained by preparing a polycarbonate resin composition containing the compound represented by the above formula (1) in high concentration and mixing the above polycarbonate resin composition with a polycarbonate not containing the compound of formula (1) in such a manner that the compound represented by the above formula (1) is contained in an amount of 0.01 to 10 parts by weight based on 100 parts by weight of the polycarbonate.

In this case, known mixing methods are usable. For instance, a preferred method is to mix a polycarbonate with a polycarbonate resin composition containing the compound represented by the above formula (1) in high concentration, using a biaxial extruder. The mixing temperature generally ranges from 250 to 320°C. When the mixing temperature is below 250°C, the polymer is not fully molten, resulting in insufficient mixing, whereas when it is above 320°C, thermal deterioration of an additive and the polymer is liable to occur. The mixing temperature ranges more preferably from 260 to 300°C.

The polycarbonate resin composition of the present invention has a high stabilization function against γ-ray radiation and is allowed to contain known additives for improving resistance to γ-ray radiation, in addition to the compound of the above formula (1). These additives are not limited to a particular kind and may be any kind, provided they improve γ-ray resistance of the obtained composition without causing deterioration in physical properties thereof when used in conjunction with the compound represented by the above formula (1).

Preferred examples of the additive include organic halides having a nucleus-halogenated benzene ring such as nucleus brominated bisphenol A polycarbonate; polyesters such as cyclohexane dimethanol terephthalate; polyalkylene glycols; epoxy compounds; and sulfuric compounds such as thioether. Additives which do not include a halogen-containing compound are preferred from a view point of environmental problems at the time of disposal.

The above-described additive is preferably contained in an amount of not more than 10.0 parts by weight based on 100 parts by weight of the polycarbonate as a total amount of compounds including the compound represented by the above formula (1).

Other additives may be added to the polycarbonate resin composition of the present invention as required. These additives include a release agent, a plasticizer, a thermal stabilizer, an ultraviolet stabilizer, an antioxidant, a filler, a reinforcing agent and the like.

The polycarbonate resin composition of the present invention is a polycarbonate resin composition which undergoes almost no yellowing caused by γ-ray radiation regardless of the radiation in air or a $O_2$-free atmosphere, while retaining excellent properties of the polycarbonate such as transparency, hygienic quality, dimensional stability, impact strength and heat resistance. Therefore, the composition is stable against sterilization by γ-ray radiation and particularly suitable for use in medical materials. In addition, the composition of the present invention has an improved effect on the environment at the time of disposal.

The following examples are provided to further illustrate the present invention. It is to be understood, however, that the examples are for purpose of illustration only and are not intended as a definition of the limits of the present invention. In Examples, the term "parts" means "parts by weight".

Test samples of 2 mm in thickness were measured for a yellowness index (YI) before γ-ray radiation and a change in yellowness index (ΔYI) after γ-ray radiation by a transmittance measurement, using the Z-300A manufactured by Nippon Denshoku Kogyo K.K. in accordance with JIS K7103.

For the γ-ray radiation of the test samples, 2.5 Mrad of γ-ray was radiated onto the test samples in air and a O2-free atmosphere.

## Examples 1 to 6

A predetermined amount of a compound shown in Table 1 (the compound represented by the above formula (1)-1 for Examples 1 to 5 and the compound represented by the formula (1)-3 for Example 6) and 100 parts of bisphenol A polycarbonate (Panlite L-1225, manufactured by Teijin Chemicals, Ltd) were melt kneaded using a 30 mmφ biaxial extruder (PCM-30, manufactured by Ikegai Corporation) under such conditions as a polymer temperature of 280°C and an average residence time of approximately 3 minutes, and the resulting mixture was pelletized.

Thereafter, injection molding was carried out using an injection molding machine (M-50B, manufactured

by Meiki Seisakusho) at a cylinder temperature of 280°C and a mold temperature of 60°C to obtain a test sample of 2 mm in thickness. The test sample was exposed to γ-ray radiation both in air and in $O_2$-free atmosphere and measured for its yellowness index before and after the radiation to obtain its change in yellowness index. Results are shown in Table 1.

Table 1

| Ex. | Compound | Amount (parts) | (YI) before γ-ray radiation | (ΔYI) after γ-ray radiation | |
|---|---|---|---|---|---|
| | | | | In air | In $O_2$-free atm. |
| 1 | 4-benzyloxy-1-butanol | 0.5 | 1.6 | 6.6 | 12.3 |
| 2 | 4-benzyloxy-1-butanol | 0.7 | 1.5 | 6.1 | 8.9 |
| 3 | 4-benzyloxy-1-butanol | 1.0 | 2.6 | 3.7 | 5.6 |
| 4 | 4-benzyloxy-1-butanol | 2.0 | 2.4 | 3.3 | 3.5 |
| 5 | 4-(α-methylbenzyloxy)-1-butanol | 1.0 | 1.7 | 8.0 | 6.3 |
| 6 | 1,3-dibenzyloxy-2-propanol | 1.0 | 1.8 | 6.4 | 4.9 |

Note: "$O_2$-free atm." = oxygen-free atomsphere

Examples 7 to 24

The procedure of Examples 1 to 6 was repeated using a predetermined amount of each of the compounds shown in Table 2 (the compound represented by the above formula (1)-2) and 100 parts of bisphenol A polycarbonate (Panlite L-1225, manufactured by Teijin Chemicals, Ltd) to obtain a change in yellowness index. Results are shown in Table 2.

Table 2

| Ex. | Compound | Amount (parts) | (YI) before γ-ray radiation | (ΔYI) after γ-ray radiation | |
|---|---|---|---|---|---|
| | | | | In air | In $O_2$-free atm. |
| 7 | benzyl alcohol | 0.5 | 0.9 | 8.8 | 17.1 |
| 8 | benzyl alcohol | 0.7 | 1.2 | 6.9 | 8.4 |
| 9 | benzyl alcohol | 1.0 | 1.2 | 6.4 | 6.4 |
| 10 | benzyl alcohol | 1.5 | 1.5 | 5.1 | 4.4 |
| 11 | benzyl alcohol | 2.0 | 1.8 | 4.3 | 2.7 |
| 12 | benzyl alcohol | 3.1 | 2.5 | 3.4 | 2.0 |
| 13 | p-bromobenzyl alcohol | 1.0 | 1.8 | 4.9 | 2.8 |
| 14 | p-phenylbenzyl alcohol | 1.0 | 1.8 | 6.9 | 11.2 |
| 15 | p-phenylbenzyl alcohol | 2.0 | 2.2 | 5.3 | 7.0 |
| 16 | p-phenoxybenzyl alcohol | 1.0 | 2.1 | 7.7 | 15.3 |
| 17 | p-phenoxybenzyl alcohol | 2.0 | 1.9 | 6.2 | 8.2 |
| 18 | α-ethylbenzyl alcohol | 1.0 | 0.9 | 4.4 | 5.7 |
| 19 | α-ethylbenzyl alcohol | 2.0 | 1.6 | 3.0 | 3.6 |
| 20 | p-propoxycarbonylbenzyl alcohol | 1.0 | 1.3 | 5.2 | 3.7 |
| 21 | p-propoxycarbonylbenzyl alcohol | 2.0 | 1.9 | 3.7 | 2.3 |
| 22 | p-hexyloxymethylbenzyl alcohol | 1.0 | 1.4 | 4.7 | 7.7 |
| 23 | p-hexyloxymethylbenzyl alcohol | 2.0 | 1.8 | 2.9 | 3.8 |
| 24 | benzyl alcohol +<br>polypropylene glycol | 1.0<br>0.7 | 2.6 | 5.4 | 5.2 |

Examples 25 to 33

The procedure of Examples 1 to 6 was repeated using a predetermined amount of each of the compounds shown in Table 3 (the compound represented by the above formula (1)-3 for Examples 25 to 31 and the compound represented by the above formula (1)-4 for Examples 32 and 33) and 100 parts of bisphenol A polycarbonate (Panlite L-1225, manufactured by Teijin Chemicals, Ltd) to obtain a change in yellowness index. Results are shown in Table 3.

Table 3

| Ex. | Compound | Amount (parts) | (YI) before γ-ray radiation | (ΔYI) after γ-ray radiation | |
|---|---|---|---|---|---|
| | | | | In air | In $O_2$-free atm. |
| 25 | dibenzyl ether | 0.5 | 1.3 | 8.9 | 17.8 |
| 26 | dibenzyl ether | 0.76 | 1.5 | 6.3 | 13.3 |
| 27 | dibenzyl ether | 1.0 | 1.4 | 5.4 | 10.3 |
| 28 | dibenzyl ether | 1.27 | 1.6 | 4.6 | 8.6 |
| 29 | dibenzyl ether | 1.5 | 1.6 | 4.4 | 7.6 |
| 30 | p-(α,α'-dibenzyloxy)xylylene | 1.0 | 2.4 | 7.7 | 17.1 |
| 31 | p-(α,α'-dibenzyloxy)xylylene | 2.0 | 3.1 | 5.7 | 9.8 |
| 32 | 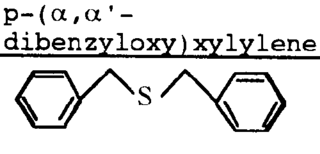 | 1.0 | 1.3 | 1.4 | 2.0 |
| 33 | 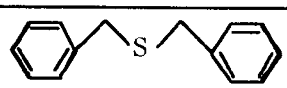 | 2.0 | 1.8 | 1.4 | 0.8 |

Examples 34 to 58

The procedure of Examples 1 to 6 was repeated using a predetermined amount of each of the compounds shown in Table 4 (the compound represented by the above formula (1)-3 for Examples 34 to 54 and the compound in which $R^1$ in the above formula (1) is equivalent to $R^{12}$ for Examples 55 to 58) and 100 parts of bisphenol A polycarbonate (Panlite L-1225, manufactured by Teijin Chemicals, Ltd) to obtain a change in yellowness index. Results are shown in Table 4.

Table 4

| Ex. | Compound | Amount (parts) | (YI) before g-ray radiation | (ΔYI) after γ-ray radiation | |
|---|---|---|---|---|---|
| | | | | In air | In $O_2$-free atm. |
| 34 | benzylbutyl ether | 1.0 | 2.7 | 2.6 | 3.6 |
| 35 | benzylbutyl ether | 2.0 | 2.3 | 2.1 | 2.3 |
| 36 | benzyl-i-pentyl ether | 1.0 | 1.6 | 3.5 | 4.1 |
| 37 | benzyl-i-pentyl ether | 2 0 | 1.8 | 2.3 | 2.8 |
| 38 | benzyl-t-butyl ether | 2.0 | 2.7 | 3.1 | 1.5 |
| 39 | benzyl-s-butyl ether | 1.0 | 2.1 | 3.3 | 2.9 |
| 40 | benzyl-s-butyl ether | 2.0 | 2.9 | 2.5 | 1.8 |
| 41 | benzylcyclohexyl ether | 1.0 | 1.6 | 3.9 | 5.5 |
| 42 | benzylcyclohexyl ether | 2.0 | 1.7 | 3.0 | 3.2 |
| 43 | benzylphenyl ether | 0.5 | 2.3 | 7.8 | 6.3 |
| 44 | benzylphenyl ether | 1.0 | 2.5 | 6.0 | 5.0 |
| 45 | benzylphenyl ether | 2.0 | 2.8 | 4.2 | 3.9 |
| 46 | benzyl-p-tolyl ether | 0.5 | 1.5 | 10.5 | 13.9 |
| 47 | benzyl-p-tolyl ether | 0.76 | 1.6 | 8.3 | 10.2 |
| 48 | benzyl-p-tolyl ether | 1.0 | 1.6 | 7.3 | 8.3 |
| 49 | benzyl-p-tolyl ether | 1.27 | 1.6 | 6.8 | 7.6 |
| 50 | benzyl-p-tolyl ether | 1.5 | 1.8 | 6.3 | 7.1 |
| 51 | benzyl-p-tolyl ether | 2.0 | 1.9 | 5.0 | 5.1 |
| 52 | benzyl-o-tolyl ether | 1.0 | 2.3 | 5.0 | 9.2 |
| 53 | benzyl-o-tolyl ether | 1.5 | 2.3 | 4.4 | 7.1 |
| 54 | benzyl-o-tolyl ether | 2.0 | 2.5 | 3.7 | 5.5 |
| 55 | (p-methylbenzyl)phenyl ether | 1.0 | 1.6 | 7.2 | 7.4 |
| 56 | (o-methylbenzyl)phenyl ether | 1.0 | 1.8 | 7.6 | 10.2 |
| 57 | (m-methylbenzyl)phenyl ether | 1.0 | 1.7 | 8.1 | 9.2 |
| 58 | (m-methylbenzyl)ohenyl ether | 2.0 | 1.7 | 5.8 | 6.9 |

Examples 59 to 64

The procedure of Examples 1 to 6 was repeated using a predetermined amount of each of the compounds shown in Table 5 (the compound represented by the above formula (1)-3 for Examples 59 and 60 and the compound represented by the above formula (1)-5 for Examples 61 to 64) and 100 parts of bisphenol A polycarbonate (Panlite L-1225, manufactured by Teijin Chemicals, Ltd) to obtain a change in yellowness index. Results are shown in Table 5.

Table 5

| Ex. | Compound | Amount (parts) | (YI) before γ-ray radiation | (ΔYI) after γ-ray radiation | |
|---|---|---|---|---|---|
| | | | | In air | In $O_2$-free atm. |
| 59 | ethoxyethylbenzyl ether | 1.0 | 1.8 | 2. | 2.7 |
| 60 | ethoxyethylbenzyl ether | 2.0 | 2.2 | 2.1 | 2.0 |
| 61 | 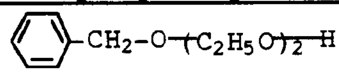 | 1.0 | 1.5 | 4.4 | 5.7 |
| 62 | 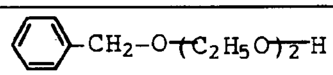 | 2.0 | 1.8 | 3.0 | 3.3 |
| 63 | 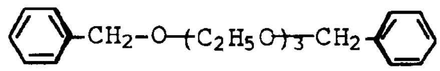 | 1.0 | 1.3 | 5.3 | 11.9 |
| 64 | 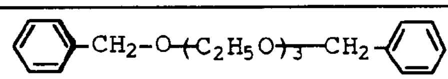 | 2.0 | 1.6 | 4. | 8.7 |

Examples 65 to 68

The procedure of Examples 1 to 6 was repeated using a predetermined amount of each of the compounds shown in Table 6 (the compound represented by the above formula (1)-6) and 100 parts of bisphenol A polycarbonate (Panlite L-1225, manufactured by Teijin Chemicals, Ltd) to obtain a change in yellowness index. Results are shown in Table 6.

Table 6

| Ex. | Compound | Amount (parts) | (YI) before γ-ray radiation | (ΔYI) after γ-ray radiation | |
|---|---|---|---|---|---|
| | | | | In air | In O2-free atm. |
| 65 | benzyl(trimethylsilyl)ether | 0.5 | 1.6 | 5.0 | 6.5 |
| 66 | benzyl(trimethylsilyl)ether | 1.0 | 2.1 | 4.1 | 3.7 |
| 67 | benzyl(trimethylsilyl)ether | 2.0 | 2.6 | 3.7 | 3.7 |
| 68 | benzyl(triisopropylsilyl)ether | 2.0 | 2.1 | 4.2 | 4.0 |

Examples 69 to 71

The procedure of Examples 1 to 6 was repeated using a predetermined amount of each of the compounds shown in Table 7 (the compound represented by the above formula (1)-7) and 100 parts of bisphenol A polycarbonate (Panlite L-1225, manufactured by Teijin Chemicals, Ltd) to obtain a change in yellowness index. Results are shown in Table 7.

Table 7

| Ex. | Compound | Amount (parts) | (YI) before γ-ray radiation | (ΔYI) after γ-ray radiation | |
|---|---|---|---|---|---|
| | | | | In air | In $O_2$-free atm. |
| 69 | benzylglycidyl ether | 1.0 | 1.5 | 5.1 | 6.9 |
| 70 | benzylglycidyl ether | 1.5 | 1.8 | 3.6 | 5.6 |
| 71 | benzylglycidyl ether | 2.0 | 2.0 | 3.6 | 4.6 |

Comparative Examples 1 to 6

The procedure of the above-described examples was repeated using only the bisphenol A polycarbonate (Panlite L-1225, manufactured by Teijin Chemicals, Ltd) used in the above-described examples, or a combination of a predetermined amount of each of the compounds shown in Table 8 and 100 parts of the polycarbonate to obtain a change in yellowness index. Results are shown in Table 8.

Table 8

| Comp. Ex. | Compound | Amount (parts) | (YI) before γ-ray radiation | (ΔYI) after γ-ray radiation | |
|---|---|---|---|---|---|
| | | | | In air | In $O_2$-free atm. |
| 1 | none | 0 | 1.5 | 16.1 | 50.9 |
| 2 | polypropylene glycol (#1000 Kishida Chemicals and Co.,Ltd) | 0.5 | 1.2 | 16.7 | 41.5 |
| 3 | polypropylene glycol (#1000 Kishida Chemicals and Co.,Ltd) | 1.0 | 1.0 | 7.5 | 11.1 |
| 4 | polypropylene glycol (#1000 Kishida Chemicals and Co.,Ltd) | 1.5 | 1.1 | 5.4 | 8.7 |
| 5 | polypropylene glycol (#1000 Kishida Chemicals and Co.,Ltd) | 2.0 | 1.3 | 4.8 | 6.2 |
| 6 | α-pineneoxide | 1.5 | - | 14.0 | 35.2 |

It is understood from the above results that the polycarbonate resin composition of the present invention has extremely high stability against γ-ray and a small change in yellowing against γ-ray radiation regardless

of radiation in air and a $O_2$-free atmosphere.

**Claims**

1. A polycarbonate composition having improved resistance to γ-ray radiation, comprising:
(A) 100 parts by weight of a polycarbonate having substantially no carbon-to-carbon unsaturated bond which can be cleaved by γ-ray radiation, at its terminal(s); and
(B) 0.01 to 10 parts by weight of a compound represented by the following formula (1):

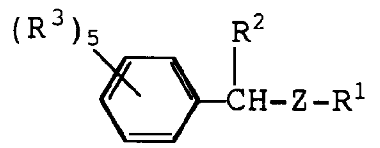

...(1)

wherein $R^1$ is selected from the group consisting of hydrogen atom, a hydrocarbon group having 1 to 12 carbon atoms, a $C_{1-12}$ hydrocarbon-O-$C_{2-12}$ hydrocarbon group, a hydrocarbon group having 2 to 12 carbon atoms and at least one hydroxyl group, a poly(oxy $C_{2-4}$ alkylene) group, a tri($C_{1-6}$ hydrocarbon)silyl group and a glycidyl group, $R^2$ is selected from the group consisting of hydrogen atom and a hydrocarbon group having 1 to 12 carbon atoms, $R^3$ is selected from the group consisting of hydrogen atom, a halogen atom, a hydrocarbon group having 1 to 12 carbon atoms, a ($C_{1-12}$ hydrocarbon)oxymethyl group, a ($C_{1-12}$ hydrocarbon)oxy group, a ($C_{1-12}$ alkoxy)carbonyl group, a nitro group, a cyano group and an acyl group having 2 to 12 carbon atoms, five $R^3$'s may be the same or different, and Z is oxygen or sulfur atom.

2. The polycarbonate composition of claim 1, wherein the polycarbonate consists essentially of a recurring unit represented by the following formula (2):

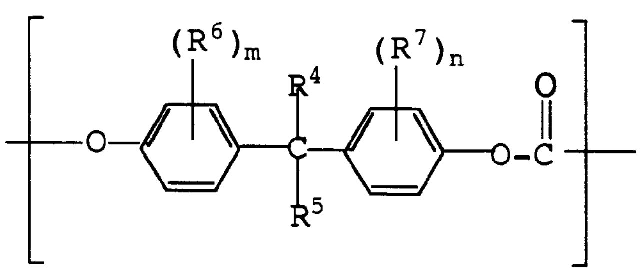

...(2)

wherein $R^4$ and $R^5$ are independently selected from the group consisting of hydrogen atom, alkyl group having 1 to 5 carbon atoms and a cycloalkyl group having 5 to 6 carbon atoms, or $R^4$ and $R^5$ may be bonded to each other to form, together with a carbon atom to which $R^4$ and $R^5$ are bonded, a 5- or 6-membered ring, $R^6$ and $R^7$ are independently selected from the group consisting of a halogen atom, an alkyl group having 1 to 5 carbon atoms and a phenyl group, and m and n are independently 0, 1 or 2.

3. The polycarbonate composition of claim 1, wherein the polycarbonate has a terminal group represented by the following formula (3):

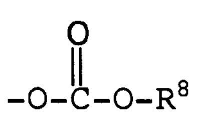

...(3)

wherein $R^8$ is a phenyl group, a $C_{1-12}$ alkyl-substituted phenyl group, or a group represented by the following formula (4):

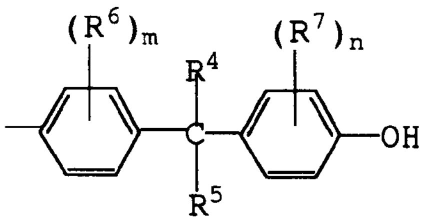

. . . (4)

wherein $R^4$, $R^5$, $R^6$, $R^7$, m and n are the same as defined in the above formula (2).

4. The polycarbonate composition of claim 1, wherein the hydrocarbon group having 1 to 12 carbon atoms for $R^1$ in the above formula (1) is an alkyl group having 1 to 12 carbon atoms, a cycloalkyl group having 5 to 12 carbon atoms, an aryl group having 6 to 12 carbon atoms, an alkylaryl group having 7 to 12 carbon atoms, or an aralkyl group having 7 to 12 carbon atoms.

5. The polycarbonate composition of claim 1, wherein the $C_{1-12}$ hydrocarbon-O-$C_{2-12}$ hydrocarbon group for $R^1$ in the above formula (1) is a $C_{1-12}$ alkyl-O-$C_{2-12}$ alkyl group, a $C_{1-12}$ alkyl-O-$C_{6-12}$ aryl group, a $C_{7-12}$ aralkyl-O-$C_{2-12}$ alkyl group, or a $C_{7-12}$ aralkyl-O-$C_{6-12}$ aryl group.

6. The polycarbonate composition of claim 1, wherein the hydrocarbon group having 2 to 12 carbon atoms and at least one hydroxyl group for $R^1$ in the above formula (1) is an alkyl group having 2 to 12 carbon atoms and at least one hydroxyl group.

7. The polycarbonate composition of claim 1, wherein the poly(oxy $C_{2-4}$ alkylene) group for $R^1$ in the above formula (1) is represented by the following formula (5):

$$-(Y-O)_p-R^9 \qquad (5)$$

wherein Y is an alkylene group having 2 to 4 carbon atoms, $R^9$ is selected from the group consisting of hydrogen atom, an alkyl group having 1 to 16 carbon atoms, an aryl group having 6 to 12 carbon atoms, an alkylaryl group having 6 to 16 carbon atoms, and an aralkyl group having 7 to 16 carbon atoms, and p is an integer of 2 to 100.

8. The polycarbonate composition of claim 1, wherein the tri($C_{1-6}$ hydrocarbon)silyl group for $R^1$ in the above formula (1) is a tri($C_{1-6}$ alkyl)silyl group, a triphenylsilyl group, a di($C_{1-6}$ alkyl)phenylsilyl group or a ($C_{1-6}$ alkyl)diphenylsilyl group.

9. The polycarbonate composition of claim 1, wherein the hydrocarbon group having 1 to 12 carbon atoms for $R^2$ in the above formula (1) is an alkyl group having 1 to 12 carbon atoms, a cycloalkyl group having 5 to 12 carbon atoms or a phenyl group.

10. The polycarbonate composition of claim 1, wherein the halogen atom for $R^3$ in the above formula (1) is chlorine atom or bromine atom.

11. The polycarbonate composition of claim 1, wherein the hydrocarbon group having 1 to 12 carbon atoms for $R^3$ in the above formula (1) is an alkyl group having 1 to 12 carbon atoms or a phenyl group.

12. The polycarbonate composition of claim 1, wherein the ($C_{1-12}$ hydrocarbon)oxymethyl group for $R^3$ in the above formula (1) is a ($C_{1-12}$ alkyl)oxymethyl group or a ($C_{7-12}$ aralkyl)oxymethyl group.

13. The polycarbonate composition of claim 1, wherein the ($C_{1-12}$ hydrocarbon)oxy group for $R^3$ in the above formula (1) is an alkyloxy group having 1 to 12 carbon atoms, a phenoxy group or a benzyloxy group.

14. The polycarbonate composition of claim 1, wherein the compound represented by general formula (1) is a compound represented by one of the following general formulae (1)-1 to (1)-7:

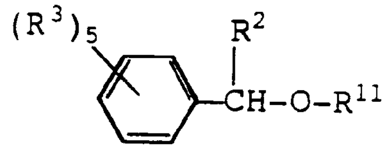 ...(1)-1

wherein $R^{11}$ is a hydrocarbon group having 2 to 12 carbon atoms and at least one hydroxyl group, and $R^2$ and $R^3$ are as defined in claim 1;

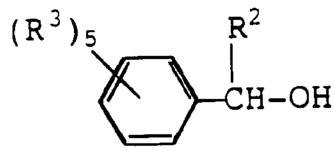 ...(1)-2

wherein $R^2$ and $R^3$ are as defined in claim 1;

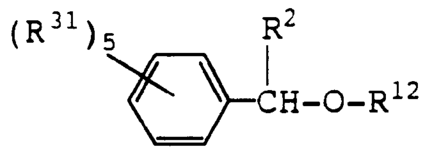 ...(1)-3

wherein $R^{31}$ is a hydrogen atom or a ($C_{1-12}$ hydrocarbon)oxymethyl group, $R^{12}$ is a hydrocarbon group having 1 to 12 carbon atoms or a $C_{1-12}$ hydrocarbon-O-$C_{2-12}$ hydrocarbon group, and $R^2$ is as defined in claim 1;

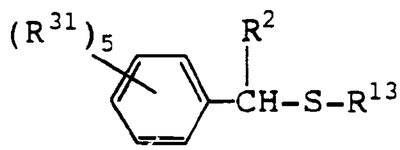 ...(1)-4

wherein $R^{13}$ is an aralkyl group having 7 to 12 carbon atoms, and $R^{31}$ and $R^2$ are as defined in the above formula (1)-3;

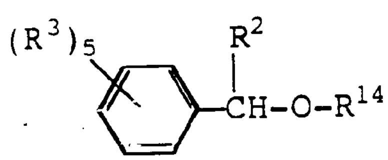 ...(1)-5

wherein $R^{14}$ is a poly(oxy $C_{2-4}$ alkylene) group, and $R^2$ and $R^3$ are as defined in claim 1;

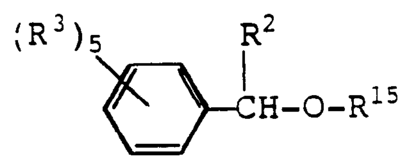 ...(1)-6

wherein $R^{15}$ is a tri($C_{1-6}$ hydrocarbon)silyl group, and $R^2$ and $R^3$ are as defined in claim 1;

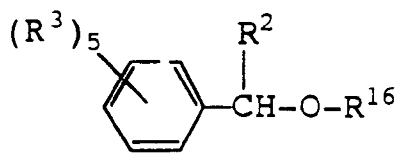

...(1)-7

wherein $R^{16}$ is a glycidyl group, and $R^2$ and $R^3$ are as defined in claim 1.

**15.** Medical polycarbonate molded articles produced from the polycarbonate composition of claim 1 and sterilizable by γ-ray radiation.

**16.** Use of the polycarbonate composition of claim 1 as a material for producing medical polycarbonate molded articles sterilizable by γ-ray radiation.

European Patent Office

# EUROPEAN SEARCH REPORT

Application Number
EP 95 30 0257

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 384 110 (MOBAY)<br>* page 3, line 59 - line 53 *<br>* page 5, line 5 - line 40 *<br>* claims 1-7; example 2; table 1 * | 1-4,8, 12,14-16 | C08K5/06<br>C08K5/37<br>C08K5/54<br>C08K5/15<br>C08L69/00 |
| X | US-A-4 880 850 (GENERAL ELECTRIC)<br>* column 8, line 39 - line 53; claims 1,2,15-20,22,24,27,32-35; examples 50-54,61-73 * | 1,2,5, 12-16 | |
| P,X | PATENT ABSTRACTS OF JAPAN<br>vol. 18 no. 501 (C-1251) ,20 September 1994<br>& JP-A-06 166807 (TEIJIN CHEM LTD) 14 June 1994,<br>* abstract * | 1,2,15, 16 | |

TECHNICAL FIELDS SEARCHED (Int.Cl.6)

C08K

The present search report has been drawn up for all claims

| Place of search | Date of completion of the search | Examiner |
|---|---|---|
| THE HAGUE | 24 April 1995 | Engel, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)